# EUROPEAN PATENT SPECIFICATION

(11) **EP 2 604 218 B1**
(45) Date of publication and mention of the grant of the patent: **04.11.2015**
(21) Application number: 11193933.6
(22) Date of filing: 16.12.2011
(51) Int. Cl.: A61C 7/14, A61C 7/00

(54) **Mold for making a customized orthodontic bracket, and method of making the mold**
Form zur Herstellung einer individuell angepassten orthodontischen Klammer und Verfahren zur Herstellung der Form
Moule de fabrication d'un support orthodontique personnalisé et procédé de fabrication du moule

(43) Date of publication of application: 19.06.2013
(73) Proprietor: 3M Innovative Properties Company, Saint Paul, MN 55133-3427 (US)
(72) Inventor: Paehl, Ralf, 49324 Melle (DE); Weise, Thomas, 36284 Hohenroda (DE); Blees, Dietmar, 82584 Löhne (DE)
(74) Representative: Hohmann, Arno

(56) References cited:
- WO-A1-2009/158231
- US-A- 4 094 068
- US-A- 5 820 368
- US-A1- 2007 087 302
- US-A1- 2011 212 420

## Description

### Field of the Invention

The invention generally relates to the making of customized orthodontic brackets, and in particular relates to a mold for forming one or more customized orthodontic brackets. Further the invention relates to a method of making such a mold and a method of making a customized orthodontic bracket as well as to a method of applying an orthodontic bracket to a tooth.

### Background Art

Orthodontic brackets are generally used in orthodontic treatment for moving one or more teeth from an initial position to a desired position in a patient's dentition. For example the patient's teeth may be aligned relative to each other to provide the dentition with a more aesthetically pleasant appearance. Further one or more teeth may be moved within the dentition to compensate for a malocclusion. Such a movement of a tooth or teeth can be typically achieved by using one or more brackets attached to one or more teeth. These brackets, when connected to an archwire, can apply a force to the tooth or teeth toward the desired position of the teeth over a longer term.

Therefore the brackets are typically bonded to the patient's teeth and subsequently an elastic archwire is connected to archwire interfaces, for example slots, of the brackets. The archwire is typically shaped to match with the position of the archwire interfaces in the desired position of the teeth so that the archwire mismatches with the interfaces in the initial position of the teeth. Accordingly the archwire once it is installed to the brackets is elastically deformed in the initial position of the teeth and the reset force toward the non-deformed shape of the archwire causes the teeth to be urged toward the desired position.

Often the brackets are off-the-shelf products. Although such off-the-shelf-brackets are also available in the form of different types to fit with different types of teeth, like upper and lower teeth, or front or rear teeth, for example, in the recent years customized brackets have also been used. Customized brackets differentiate considerably from off-the-shelf brackets in that the customized brackets are shaped based on an individual clinical situation of a patient's teeth, whereas off-the-shelf-brackets are universally configured such that the same design can be used with different clinical situations.

For example US-A-2007/0015104 discloses a customized orthodontic bracket system.

The system can include a bracket having a customized bracket bonding pad for bonding the bracket to a tooth of a patient and a bracket slot adapted to receive a customized archwire. The customized archwire is adapted to be positioned in the bracket slot to form a precise bracket slot-archwire interface. The bracket slot and the archwire when positioned in the bracket slot can be positioned substantially adjacent the tooth surface to reduce induced vertical error in tooth positioning. The bracket slot can be configured to have a bracket slot width substantially matching a cross-section of the archwire to reduce torque rotation around an axis of the archwire when positioned therein to further enhance end of-treatment tooth positioning and reduce overall treatment time.

US 2007/0087302 discloses an orthodontic bracket having an opening for receiving a wire, but without a base to create a lever arm when the bracket is oriented in free space at a customized angle relative to a tooth surface. The bracket can be embedded into or encapsulated by an adhesive that is bonded to the tooth. A clip is provided for holding the bracket in position and occluding the opening while the adhesive is applied. And indirect methods of attaching the brackets to teeth are provided wherein the brackets can be attached to the lingual side of the teeth in a low-profile arrangement.

US 4,094,068 discloses an orthodontic bracket assembly including brackets mounted upon teeth to effect orthodontic treatment thereof is provided with a self adhesive layer adhered on one side thereof to the surface of the orthodontic bracket which is used to fasten the bracket upon a tooth. A protective foil is arranged to extend on one side of bracket wings formed upon the orthodontic bracket and defining a slot adapted to receive therein a regulating arch when the brackets are mounted upon teeth to be treated. The protective foil defines a gap or spacing within which the base of the orthodontic bracket extends and within which liquid adhesive may be introduced for attaching the bracket to the teeth to be treated. The adhesive material is shaped to form a customized base of the bracket during the step of attaching said bracket on the patients's dentition with the aid of a patient-specific transfer matrix.

Although a variety of different brackets and bracket systems are on the market there is still a desire to provide brackets which on the one hand match an individual clinical situation and on the other hand are minimized in costs for manufacturing and costs for application to a patient's teeth. Further such brackets desirably can be placed easily and precisely to a patients teeth, and further are desirably sufficiently durable over the time period of an orthodontic treatment.

### Summary of the Invention

The invention in one aspect relates to a mold for making a customized orthodontic bracket, comprising a mold cavity that is configured for molding at least part of the customized orthodontic bracket. The customized orthodontic bracket, which is preferably obtainable by use of the mold of the invention for molding, comprises:
- a body,
- a bonding pad for arranging the bracket at a desired position on a tooth in a patient's dentition, the body being preferably connected with the bonding pad; and
- an archwire interface provided by the body at a predetermined archwire position relative to the dentition;
   wherein the mold further comprises:
- a positioning structure for positioning the mold relative to the patient's dentition or to a physical model thereof, and
- wherein the mold provides the mold cavity and the positioning structure in an appropriate geometric relationship to each other, such that the at least part of the customized orthodontic bracket can be molded on the patient's dentition or the physical model thereof at the desired position, and
- wherein the mold comprises a pre-manufactured orthodontic article and is further adapted to position the orthodontic article relative to the mold cavity such that a surface of the orthodontic article is in fluid communication with the mold cavity, and
- wherein the orthodontic article comprises the archwire interface which comprises a slot for the orthodontic wire and a hook and/or wing, and
- wherein the mold comprises a mold gate for guiding a molding material into the mold cavity.

The invention is advantageous in that it allows for easy and precise placement of customized orthodontic brackets in a patient's dentition. In particular the mold of the invention preferably allows for molding of customized orthodontic brackets in place on the dentition or a model thereof. Thus manual positioning of the brackets may be facilitated or eliminated. Further a separate setup in which the brackets are pre-positioned on a physical model for a practitioner's reference may not be necessary. Further the invention preferably allows for the use of relatively inexpensive materials, like plastic materials for at least a portion of the customized orthodontic brackets. The invention may further allow for replacing necessary handling steps and logistics for manufacturing of a plurality of single customized orthodontic brackets by a less complex procedure. In particular, because the mold may provide for molding and handling a plurality of brackets generally simultaneously, efforts in handling and logistics may be significantly minimized by the invention. Additionally the invention enables the use of pre-manufactured parts to obtain a customized orthodontic bracket, instead of manufacturing entire individual customized brackets. Accordingly the invention may help minimizing manufacturing costs of the brackets. As another advantage of the invention the mold, or parts of the mold, maybe reused, for example for replacing or repairing a customized orthodontic bracket in a patient's dentition.

The molded part of the customized orthodontic bracket as it may be obtained by use of the mold of the invention is at least partially shaped by the mold so as to provide the bracket with a pre-determined outer shape. In particular the molded part of the customized orthodontic bracket is at least shaped by a surface of the patient's dentition (or a physical model of thereof) and a surface of the mold cavity. Further the mold preferably does not form part of the customized orthodontic bracket or the patient's dentition. In particular the mold does not remain in the patient's mouth.

The mold is adapted, such that the at least part of the customized orthodontic bracket can be molded directly on the patient's dentition or the physical model thereof.

The mold cavity is shaped to replicate the negative shape of at least part of the customized orthodontic bracket. The shape of the mold cavity is thus defined by the shape of the customized orthodontic bracket. The archwire interface allows an orthodontic archwire to be connected with the customized orthodontic bracket. Further the predetermined archwire position defines a location and orientation of the archwire interface relative to a location and orientation of the dentition in a situation in which the customized orthodontic bracket is appropriately placed to the dentition. The skilled person knows several ways to provide an appropriate placement of a customized orthodontic bracket to the patient's tooth, like one is explained in detail with reference to the Figures below. In summary the lingual and/or labial side of a patient's dentition may be selected for placing a plurality of customized orthodontic brackets to individual teeth in the dentition. Based on this the brackets may be designed using a CAD system such that the brackets can at one end be bonded to the selected side(s) of the teeth and at the other end be connected with an archwire. For the design a sufficient size of the bonding pad may be accounted for. Further a desired (for example minimized) distance between the dentition and the archwire may be accounted for, as well as further criteria such as for example the aesthetic appearance of the brackets. A so designed customized orthodontic bracket preferably has a bonding surface at the bonding pad which matches in shape with a particular portion of an outer tooth surface. An appropriate placement a pre-defined position thus can be achieved in that the bonding surface and the tooth are mated at a position in which their shapes match with each other. However the skilled person will recognize that instead of a placement of a pre-manufactured customized orthodontic bracket, the mold of the invention may be used to directly mold a customized orthodontic bracket onto a tooth in the patient's dentition.

The predetermined archwire position may further define a geometric reference of the customized orthodontic bracket shape relative to the dentition. For example in a coordinate system the outer shape or surface of the customized orthodontic bracket may have a determined geometric relationship to the archwire position and therefore the predetermined archwire position may also form the geometric reference of the bracket shape relative to the dentition.

The positioning structure may replicate a negative shape of at least part of the dentition, for example of one or more teeth. Further the mold provides the mold cavity and the positioning structure positioned according to the geometric reference relative to each other. In other words the positioning structure and the mold cavity are positioned in the mold relative to each other such that when the mold is positioned by the positioning structure on a patient's dentition, or a physical model thereof, a customized bracket can be molded at the appropriate position on the dentition or model thereof.

The mold is adapted to position a pre-manufactured orthodontic article relative to the mold cavity such that a surface of the orthodontic article is in fluid communication with the mold cavity. The pre-manufactured orthodontic article is placed in the mold cavity such that a remaining space in the cavity is used to mold a portion of the customized orthodontic bracket in joint connection with the pre-manufactured orthodontic article. This may for example allow for combining a material exhibiting a certain desired material property (for example a high mechanical strength) and a customized fit with the patient's clinical situation in a single customized orthodontic bracket.

Further, the mold comprises the pre-manufactured orthodontic article. This means that the pre-manufactured orthodontic article is provided in the mold cavity so that a user does not need to assign and place the pre-manufactured orthodontic articles in the mold. Accordingly this helps minimizing time for preparing the mold for use.

The pre-manufactured orthodontic article is a partial bracket. Such partial bracket may be completed by molding another part of the bracket by use of the mold of the invention. The pre-manufactured orthodontic article comprises the archwire interface. The archwire interface of the pre-manufactured orthodontic article may be of a mechanically strong material, like metal, for example. Further the pre-manufactured orthodontic article may comprise the bonding pad or a portion thereof. The skilled person will recognize several embodiments of a partial bracket which may be customized with regard to a particular clinical situation in a patient's dentition.

The archwire interface comprises a slot for the orthodontic wire. Thus the pre-manufactured orthodontic article provides the archwire interface in the form of a receptacle for positioning the archwire relative to or at the customized orthodontic bracket. The slot may for example be configured to form an interference fit with an archwire that has a rectangular or elliptical cross-section. The archwire interface further comprises a hook and/or one or more wings. Accordingly the pre-manufactured orthodontic article provides means for attaching an elastic band for retaining the archwire in the receptacle.

In one embodiment the mold cavity has a tooth-related opening. The tooth-related opening is preferably arranged and shaped such that the associated tooth seals the tooth-related opening when the mold is positioned at the patient's dentition or the replication thereof.

Further, the mold comprises a mold gate for guiding a molding material into the mold cavity. The mold gate may be adapted for connecting with a dispensing device for supplying the mold material. The mold may further comprise one or more de-aeration channels for the mold cavity.

The invention further relates to a kit for making a customized orthodontic bracket. The kit comprises a mold according to the invention, and a hardenable molding material. The hardenable molding material may be provided outside from the mold, for example provided in a mold material dispensing device. The kit may further comprise differently colored molding materials. The colors may resemble typical colors of natural teeth. However the colors may further correspond to other colors, for example so-called trend colors to provide customized orthodontic brackets with a modern appearance.

In another embodiment the kit further comprises a plurality of pre-manufactured orthodontic articles. The plurality of pre-manufactured orthodontic articles may comprise differently configured archwire interfaces, for examples may have differently shaped or angled slots. This may facilitate designing a customized orthodontic bracket using a pre-manufactured orthodontic article.

Hereafter disclosed is a method of making a mold for providing a customized orthodontic bracket which has a body and a bonding pad for arranging the bracket on a tooth in a patient's dentition, the method comprising the steps of:
- providing a computer model of the patient's dentition;
- providing a computer model of a customized orthodontic bracket which has:
   - a body,
   - a bonding pad for arranging the bracket at a desired position on a tooth in a patient's dentition; and
   - an archwire interface provided by the body at a predetermined archwire position relative to the dentition;
- creating a computer model of a mold with the negative shape of the customized orthodontic bracket model to define a mold cavity and with the negative shape of the patient's dentition to define a positioning structure; thereby the negative shape of the patient's dentition maybe provided based on the patient's dentition model;
- wherein mold cavity and the positioning structure are provided in an appropriate geometric relationship to each other, such that the mold obtainable by this method allows for at least part of the customized orthodontic bracket to be molded on the patient's dentition or the physical model thereof at the desired position.

The method may further comprise the steps of:
- providing a computer model of an archwire interface for the bracket;
- positioning the archwire interface model relative to the dentition model and thereby determining an archwire position relative to the dentition;
- using a shape of the customized orthodontic bracket to provide a shape of a mold cavity which replicates the negative shape of at least part of the customized orthodontic bracket;
- using a shape of the dentition model to provide a shape of a positioning structure for positioning the mold at the patient's dentition or a physical model thereof, such that the positioning structure replicates the negative shape of at least part of the dentition model;
- using the determined archwire position as a geometric reference of the customized orthodontic bracket relative to the dentition, and
- using with the shape of the mold cavity and the shape positioning structure to form a computer model of the mold in which the mold cavity and the positioning structure are positioned according to the geometric reference relative to each other.

The method may further comprise the step of building-up the mold using a rapid prototyping process, like 3D printing or laser sintering. The method may further comprise the step of building-up a negative of the mold using a rapid prototyping process. Such a negative may correspond to a physical model of the customized orthodontic bracket which may be used to form the mold by physical impressioning. For example such negative may be provided in a hardenable dental impression material and removed from the hardened impression material to form the mold cavity. Gates and de-aeration channels may be created during the impressioning by embedding appropriate physical items or may be mechanically added in the hardened impression material.

Hereafter disclosed is a method of applying an orthodontic bracket to a tooth.

The method comprises the steps of:
- providing a physical model of a patient's dentition;
- positioning a mold according to the invention on the physical model;
- providing a molding material in the mold.

The molding material may be provided into the mold from outside, for example by a dental practitioner or a dental technician. Further the molding material may by prefilled in the mold, for example in a repository in the mold which can be opened for transferring the material from the repository to the mold cavity.

The method may further comprise the steps of allowing the molding material to harden, and removing the mold from the physical model.

The method may further comprise the step of providing a pre-manufactured orthodontic article in the mold prior to providing the molding material in the mold.

The method may allow for example a dental technician to directly generate one or more customized orthodontic brackets on a model of a patient's dentition and thereby may automatically obtain a setup of the customized orthodontic brackets which can be handed over to the orthodontic practitioner. Therefore a separate step of making a setup from pre-manufactured customized orthodontic brackets may be eliminated by the invention. Accordingly the invention may help saving time and costs in orthodontic treatments.

### Brief Description of the Figures

- Fig. 1: is a cross-sectional view of a customized orthodontic bracket attached to a patient's tooth;
- Fig. 2: is a view of a computer model of a patient's dentition with a tooth in an initial position;
- Fig. 3: is a view of a computer model of Fig. 2 with the tooth in a desired position;
- Fig. 4: is a perspective view of a computer model of a patient's dentition illustrating tooth bonding surfaces for a customized orthodontic bracket;
- Fig. 5: is a perspective view of the bonding surfaces of Fig. 4;
- Fig. 6: is a cross-sectional view of a computer model of a customized orthodontic bracket in relation to a computer model of a patient's dentition;
- Fig. 7: is a cross-sectional view of a mold;
- Fig. 8: is a cross-sectional view of the mold of Fig. 7 placed on a patient's dentition or a physical model thereof;
- Fig. 9: is a cross-sectional view of the mold of Fig. 7 placed on a patient's dentition or a physical model thereof and filled with a molding material;
- Fig. 10: is a cross-sectional view of the mold of Fig. 7 placed on a patient's dentition or a physical model thereof, and a perspective view of a customized orthodontic bracket;
- Fig. 11: is a cross-sectional view of a mold comprising a pre-manufactured orthodontic article according to the invention;
- Fig. 12: is a view illustrating a kit of parts comprising a plurality of different pre-manufactured articles for use in a mold according to an embodiment of the invention; and
- Fig. 13: is a cross-sectional view of a computer model of a bonding pad of customized orthodontic bracket in relation to a computer model of a patient's dentition.

### Detailed Description of the Invention

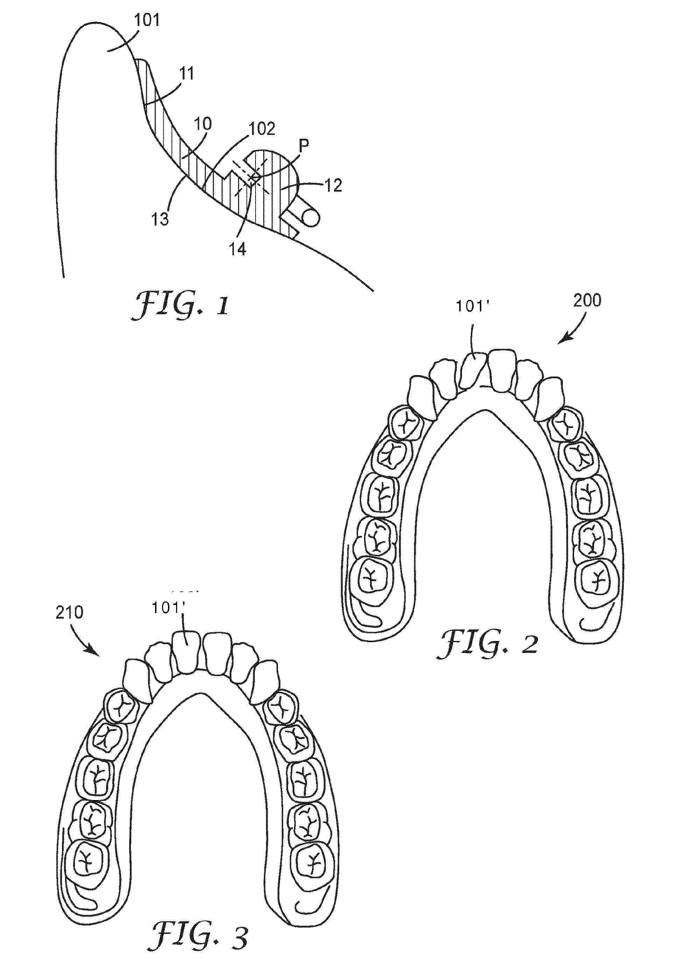

Fig. 1 shows, by way of example only, an incisal tooth 101 to which a customized bracket 10 is attached. In the example the customized bracket 10 is attached to the lingual side of the tooth 101. The skilled person will recognize that in other examples customized brackets may be attached to a canine, premolar or molar, as well as that customized brackets may be arranged on the labial or lingual side of the tooth. The customized bracket 10 has a bonding pad 11 and a body 12. The bonding pad 11 forms a bracket bonding surface 13. The bonding surface 13 is the surface of the bracket which faces the tooth in a situation in which the bracket is bonded to a tooth. The bracket bonding surface 13 is adapted such that it can be bonded to the outer surface of the tooth 101, for example the bracket bonding surface 13 may be roughened or may have retention elements allowing a hardenable adhesive to retain with the bracket bonding pad 11. The bracket bonding surface 13 has an overall surface structure (or "landscape") which substantially corresponds to a negative surface structure (or "landscape") of the "tooth bonding surface" 102. For the purpose of this specification the "tooth bonding surface" corresponds to a particular predetermined outer surface portion of the tooth on which the bracket bonding surface is bonded or received. Further the bracket bonding surface 13 has a surface area (or "foot print") which is shaped to allow for a precise placement of the bracket 10 to the tooth and which preferably provides for and a high bond strength of the bracket at the tooth 101.

In the example the bracket bonding surface 13 is bonded, for example with an adhesive (not shown), to the tooth 101. Due to the surface structure of the bracket bonding surface 13 corresponding to the surface structure of the tooth bonding surface 102 the adhesive arranged between these two surfaces has a substantially uniform thickness. This preferably allows for example for minimizing the amount and thickness of the adhesive. This is in contrast to an off-the-shelf-bracket bonded on a tooth where the adhesive is typically used to compensate differently shaped surfaces of the bracket and the tooth. It has been found that a uniform and minimized thickness of the adhesive can help maximizing the durability of the bond between the customized bracket and the tooth.

Further the body 12 of the bracket 10 comprises an archwire interface for receiving an archwire (not shown), which in the example is a slot 14. The customized bracket 10 is configured such that the archwire interface is positioned at an individual predetermined position P associated with the tooth 101. In particular the position P corresponds to a predetermined coordinate relative to the tooth bonding surface 102. The position P may for example correspond to a point on an axis of an archwire running through the slot 14. The slot 14 may further be arranged and shaped relative to the position P such that the archwire can be received therein. The position P of the archwire interface is determined during the bracket design. This is in contrast to off-the-shelf brackets which provide an archwire interface at a standard position not relating to any individual clinical situation of a patient. One possibility to determine the position of the archwire interface is based on the so-called "straight wire" technique. In the straight wire technique the typically U-shaped archwire runs generally planar through the brackets in the desired position of the teeth. Therefore the design of the brackets may account for a criterion that several archwire positions of a set of brackets for a patient's dentition preferably are positioned in a common plane. Other criteria may be the distance and orientation of the archwire position relative to the tooth. For example the slot 14 having a generally U-shaped configuration may be arranged with the legs of the U being oriented generally parallel and desirably close to the tooth bonding surface 102 or bracket bonding surface 13. Therefore customized brackets may provide for a maximized bonding strength, and a minimized size of the bracket in a direction in which the bracket protrudes from the tooth 101. This may further help minimizing any discomfort or articulation problems for the patient. Further customized brackets may allow facilitating the manufacturing and assembly of the archwire.

In summary the shape of the bonding pad as well as the position and orientation of the archwire interface of the customized bracket 10 are configured according to an individual clinical situation of a patient. This is in contrast to an off-the-shelf bracket which typically is designed independent from any individual clinical situation of a patient. In particular the position and orientation of the archwire interface of the off-the-shelf-bracket is typically only determined during the bonding of the bracket on a tooth and not according to the invention already predetermined in the configuration of customized bracket before the bracket is actually manufactured.

The following figures illustrate one example to achieve the described configuration of a customized bracket and a mold for forming such a customized bracket according to the invention.

Fig. 2 illustrates an initial computer model 200 of a patient's teeth, replicating the patient's teeth in an initial position. The initial computer model 200 may be obtained by three-dimensionally scanning a positive or negative physical model of the patient's teeth, for example a plaster model or a dental impression taken from the patient's teeth, and providing scan date to a CAD system. A suitable scanner and CAD system is for example available under the designation LAVA^{™} Design Systems, from 3M ESPE AG, Germany. The scan data may be suitable to derive the shape of the scanned physical model in the form of a mathematical three-dimensional surface. The CAD system may for example be adapted to operate with such mathematical three-dimensional surfaces and may further be adapted to display objects defined by such three-dimensional surfaces on a computer screen. The initial computer model 200 comprises a computer model 101' of the incisor 101 shown in Fig. 1. The incisor 101, and therefore also the incisor model 101', are somewhat misaligned relative to the neighboring teeth.

Fig. 3 illustrates a target computer model 210 with the patient's teeth at a desired position. The target computer model 210 may be obtained by virtually positioning a tooth or teeth from the initial position to a different desired position. In the example the incisor model 101' is virtually moved such that it pleasantly aligns with its neighboring teeth. The CAD system may allow for an operator to virtually position the incisor model and/or further models of teeth, for example by a drag and drop function via a manually controllable cursor on the computer screen.

Therefore the CAD system may have functionality to virtually decompose the initial computer model 200 shown in Fig. 2 into smaller tooth models each representing the shape of one tooth. This may be achieved for example by a manual surface identification performed by an operator in which the operator indicates the surfaces belonging to particular teeth. Thereby the operator may determine a margin that indicates the borderline of a surface belonging to one tooth so that the CAD system can automatically assign the surface enclosed by the margin. To define the margin the operator may define a number of points on the three-dimensional model displayed on the computer screen and those points may be automatically connected, for example by a preferably closed polygon or spline. Such a surface identification may be repeated for several tooth models. The skilled person further will be aware of automatic surface recognition algorithms which may be used instead of or in combination with any manual surface identification.

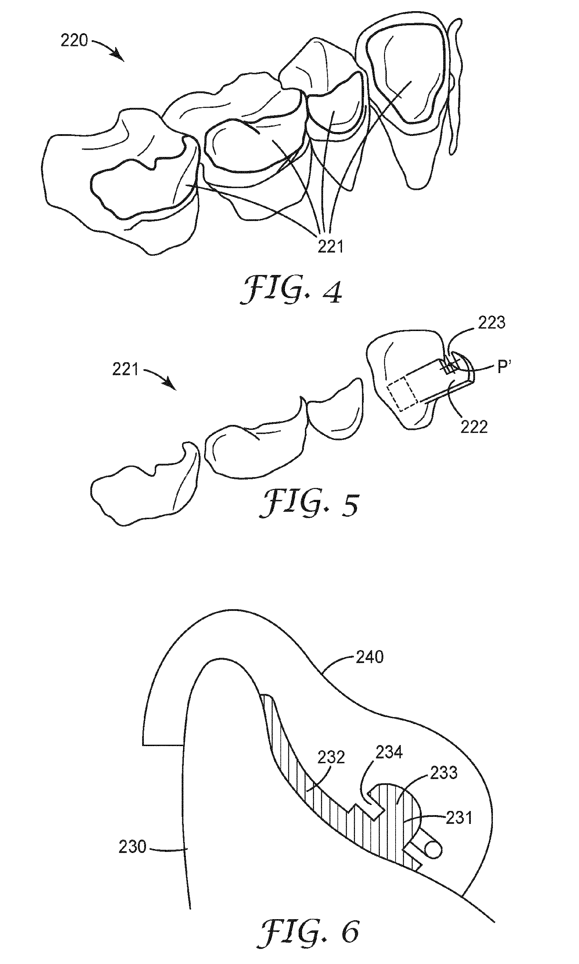

Fig. 4 shows a computer model 220 of a part of a patient's dentition. The computer model 220 comprises virtual tooth bonding surfaces 221 which are representative of the tooth bonding surfaces for the finished customized brackets on the patient's teeth. Each bonding surface may be identified in the CAD system by an operator, for example in that the operator creates a line for each bonding surface at the desired place on the computer model 220. The CAD system may have functionality to propose a minimum size, a default shape and/or a default location for the bonding surface which then may be modified by the operator as desired. The operator may for example shape the boding area such that the area covers sufficient curvature elements that allow for the finished bracket to be precisely positioned at the predetermined position on the tooth. Once the bonding surfaces 221 are defined the remainder of the bracket, in particular the bonding pad and the body, may be suitably shaped for mounting thereon. The computer model 220 may for example be based on a target computer model, meaning a computer model representing the teeth at the desired position such as the target computer model 210 shown in Fig. 3. This may for example allow for defining a common plane for the archwire interfaces and designing the bracket body based thereon ("straight wire" technique). Accordingly the brackets may be designed with accounting for a preferred shape of the archwire. However the skilled person will recognize that the bracket pad and body may further be designed based, at least in part, on an initial computer model or a model between the initial and target model. In this case the shape of the archwire may be determined based on the finished design of the brackets and the design of the bracket may be generally independent from the shape of the archwire.

Fig. 5 shows the bonding surfaces 221 extracted from the computer model 220 shown in Fig. 4. The CAD system may comprise a database storing one or more a standard shapes of brackets or bracket bodies. Such database may for example hold different standard shapes of brackets or bracket bodies for incisors, canines, premolars and molars. Further the CAD system may provide functionality to enable an operator to select, reshape and/or resize a certain standard shape with respect to the actual clinical situation represented by the computer model of a patient's teeth. Further the CAD system may provide functionality allowing the standard shape to be individually redesigned as desired or to individually design a bracket without the use of a standard shape. In the example shown a computer model 222 having a standard shape of a bracket body is roughly placed against one of the bonding surfaces 221. The standard model 222 has an archwire interface in the form of a slot 223 which defines a slot position P'. An operator may, based on the rough placement of the standard model 222, move the model 222 relative to the tooth bonding surface (221) toward a desired position of the position P' and a desired orientation of the slot 223. For example the slot 223 may be oriented such that side walls (forming the legs of the U) of the U-shaped slot are generally parallel to the bonding surface and the position P' may be positioned preferably close to the bonding surface, while accounting for a thickness of a bonding pad (not shown) and a space between the bonding pad and the slot. The skilled person will recognize that the desired position P' may be selected according to other criteria than a parallel slot. For example to provide a smooth shape of the archwire the position P' may be selected further spaced and inclined relative to the bonding pad, for example to prevent the necessity of any sharp curvature within the archwire. The bonding pad may be designed before, after or together with designing the bracket body. For example a computer model of the bonding pad may be created by automatically creating a virtual surface as an offset of the bonding surface and creating a three-dimensional model of the bonding pad between the bonding surface and this virtual surface. The CAD system may have functionality allowing an operator to create an individual bonding pad and/or to modify an automatically created bonding pad.

Fig. 6 shows a finished design of a bracket in the form of a computer model 230 placed at a tooth model 230. The bracket model 231 has a virtual bonding pad 232 and a virtual bracket body 233. The virtual bracket body 233 further has a virtual archwire slot 234 which is representative of an archwire interface of the finished bracket. The example further illustrates a model 240 of a mold for forming a bracket based on the bracket model 231. The mold model 240 may be designed manually by help of the CAD system by an operator. For example the CAD system may automatically generate a preliminary mold model between the tooth model 230 and an enlarged model of the tooth model 230. The operator may, based on the preliminary mold model, configure the mold model 240. In particular the operator may modify the shape of the preliminary mold model, add a flow gate and air holes for the mold for example.

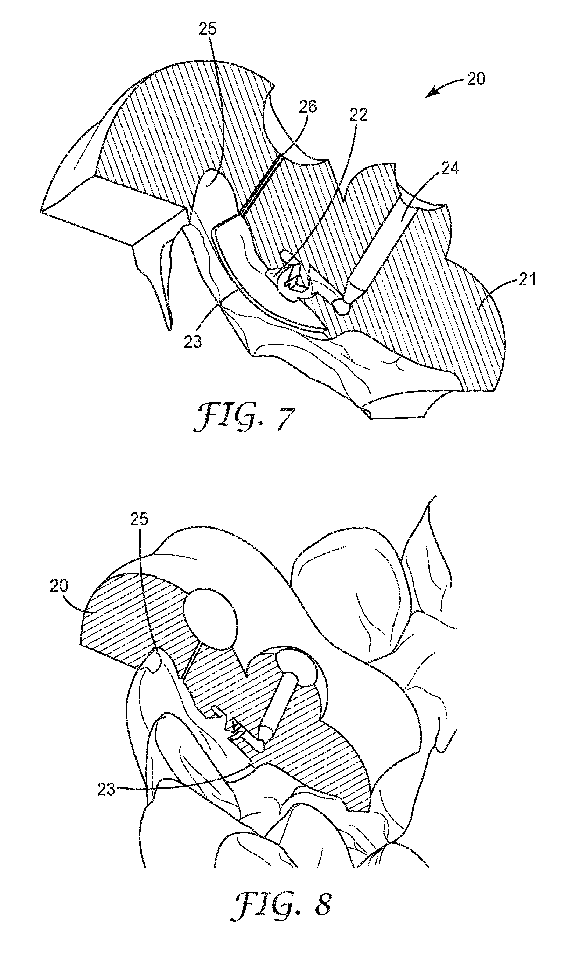

Fig. 7 shows a mold 20 for molding a customized bracket (for example as illustrated in Fig. 1). The mold 20 has a mold structure 21 that forms a mold cavity 22. The mold cavity 22, or rather the mold structure, in the example is shaped such that it replicates at least part of the negative shape of the customized bracket. In particular the mold cavity 22 (or mold structure) essentially replicates the exposed surface of the bracket. The exposed surface of the bracket for the purpose of this specification refers to the overall outer surface of the bracket without the bonding surface. Further the mold cavity 22 (or mold structure) forms a tooth-related opening 23 which is shaped to form an outer boundary of the bonding surface of the bracket. Accordingly the opening 23 matches in shape on an outer surface of a patient's tooth.

The mold 20 further has at least one mold gate 24 which enables for providing a molding material into the mold 20. Such a molding material may be a hardenable material, for example a resin or plastic material which is optionally filled with particles for mechanical reinforcement, for example glass particles (like grains or fibers) and/or carbon fibers. Further the molding material may comprise a colorant, for example for providing the bracket with a color that resembles a natural tooth. A molding material as it may be used with the present invention may be a dental restorative or cementation material, for example as available under the name RelyX^{™} Unicem or Filtek^{™} Supreme, from 3M ESPE AG, Germany.

The mold may further have one or more de-aeration channels 26 communicating with both the mold cavity and outward-facing surfaces of the mold that allow for the mold material to displace air from the mold cavity as the mold material fills the cavity. This may provide for minimizing voids or air bubbles in the molded bracket.

The mold 20 further has a positioning structure 25 for positioning the mold structure relative to a particular tooth. The positioning structure 25 is shaped such that it allows for the mold to be positioned at a predetermined molding position relative to the tooth. In particular the positioning structure 25 replicates a portion of the outer tooth surface and allows for the mold to be positioned on that tooth such that the opening 23 is sealed by the outer tooth surface. In this molding position the mold cavity 22 is preferably arranged on the tooth such that a bracket can be molded in the desired position on the tooth.

The mold may comprise a mold structure that forms a plurality of cavities. The mold may further have several mold gates each allowing a molding material to be provided in one or more cavities. Further each mold cavity may have one or more de-aeration channels.

The mold 20 may be made of a plastic material, for example of a dental impression material. Further the mold may be made of two or more different plastic materials, for example a silicone or polyether impression material. For example plastic material being more elastic may be used adjacent areas for sealing with a tooth and another plastic material being more rigid for providing the mold with a desired high mechanical stiffness may be otherwise used.

Fig. 8 shows the mold 20 placed on a dentition 100 of a patient. The dentition 100 may correspond to the actual dentition in a patient's mouth, or may be provided as a physical model thereof. The positioning structure 25 is mated with the tooth 101 in the dentition. Because the positioning structure 25 replicates part of the negative shape of the tooth 101 the positioning structure 25 enables the mold 20 to be positioned at a definite predetermined position on the dentition 100. In the situation shown the tooth-related opening 23 is sealed by a surface of the tooth 101.

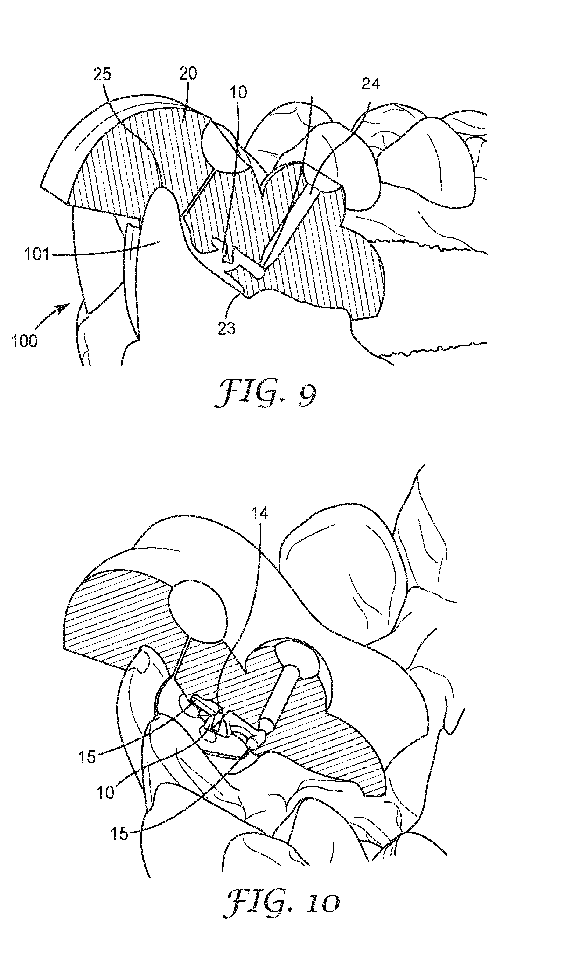

In the situation shown in Fig. 9 a flowable hardenable molding material is provided through the gate 24 in the mold 20. The mold cavity 22 is entirely filled with the molding material.

Accordingly the hardened molding material forms a customized orthodontic bracket 10. Further the tooth-related opening 23 is filled with the molding material so that the molding material is in contact with the surface of the tooth 101.

The molding material may be selected such that it can bond to a natural tooth. Accordingly the mold 20 may be used to directly mold a customized orthodondic bracket 10 on the tooth. However the mold 20 may also be used to mold the customized orthodondic bracket 10 on a dentition model. The so formed bracket is preferably removed from the dentition model and subsequently bonded to the dentition in a patient's mouth. The bracket 10 may be left within the mold 20 for bonding the bracket 10 to the dentition in a patient's mouth. Because the mold 20 exhibits the positioning structure 25 this preferably provides for a relative precise positioning of the bracket 10 to the tooth in the patient's mouth. The skilled person will recognize that further the bracket may be molded on a physical dentition model and removed from the model and the mold 20. Accordingly the invention provides for flexible manufacturing and placement of the bracket.

Fig. 10 shows the mold 20 and a molded customized orthodontic bracket 10 on a dentition 100. The bracket 10 has an archwire interface in the form of a slot 14 for receiving an archwire (not shown). Further the bracket 10 has wings 15 for attaching an elastic band (nor shown) to retain the archwire in the slot 14.

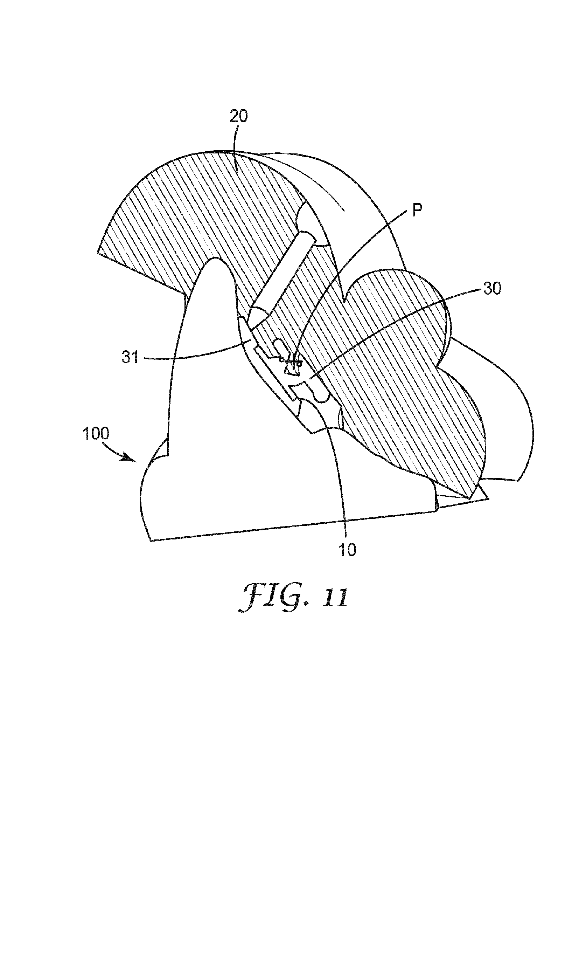

Fig. 11 shows the mold 20 which comprises a pre-manufactured orthodontic article, which in the example is a standardized bracket piece 30. The standardized bracket piece 30 in the example is completed by a molded bonding pad 31 so that overall a customized orthodontic bracket 10 is formed. As illustrated the mold positions the pre-manufactured orthodontic article according to a predetermined archwire position P. Therefore although the bracket piece 30 is standardized the finalized bracket 10 is customized because the archwire position is predetermined relative to the individual dentition 100 of a certain patient. The pre-manufactured orthodontic article may as shown form a large part of the entire customized bracket including the body with the archwire interface and part of the bonding pad. However in another example such a pre-manufactured orthodontic article may only form smaller portions of the entire customized bracket, for example the archwire interface only, the wings or hooks. This may allow for making certain portions of the bracket which are exposed to particular mechanically stress out of a material having a higher mechanical strength that the hardened molding material. Accordingly the pre-manufactured orthodontic article may be made of a metal, for example of steel.

The mold may be generally configured such that the molded portion of the customized orthodontic bracket, such as in the example the bonding pad, encloses a portion of the pre-manufactured orthodontic article. Thus a good bond between the molded portion and the pre-manufactured orthodontic article may be provided. Further the pre-manufactured orthodontic article may comprise a retention structure. The flowable mold material may flow around the retention structure during molding and may interlock with the retention structure when hardened. Such a retention structure may comprise any structure suitable for providing an interlock with the hardened molding material, for example an undercut, a dovetail, a hook, a loop, or combinations thereof.

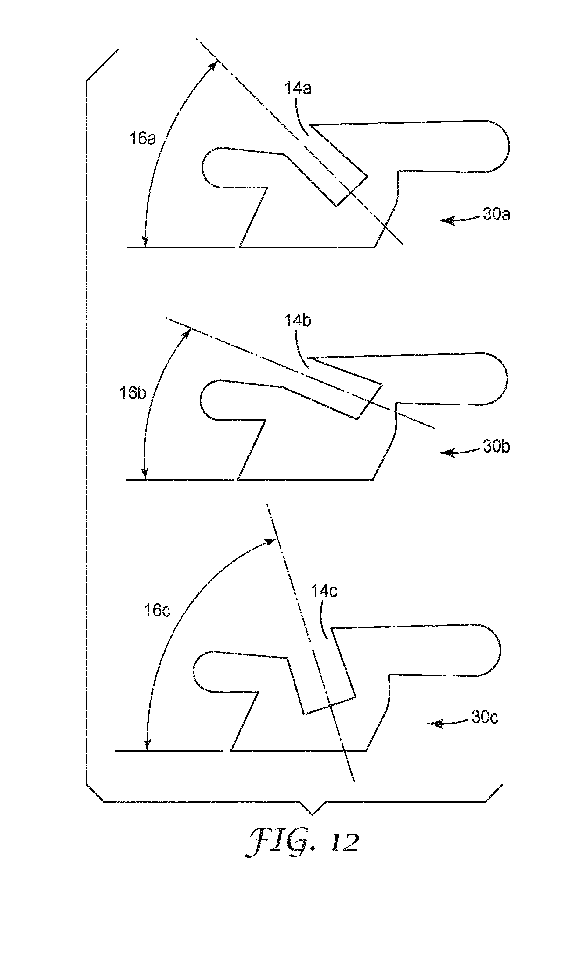

Fig. 12 shows a kit of parts comprising a plurality of pre-manufactured orthodontic articles 30a, 30b, 30c. In the example shown the kit comprises pre-manufactured orthodontic articles having slots 14a, 14b, 14c that are oriented at different angles 16a, 16b, 16c relative to a base of the articles. A particular pre-manufactured orthodontic article may be selected from the kit according to a clinical situation in a patient's mouth. For example the particular pre-manufactured orthodontic article may be selected such that the slot is arranged generally parallel to a tooth surface on with the article is applied to. This means that the generally U-shaped slot may be arranged with its side walls generally parallel to the tooth, ribbonwise or edgewise.

Such a pre-manufactured orthodontic article 30a/30b/30c may be provided in a mold of the invention and a bonding pad may be molded in that mold to complete the pre-manufactured orthodontic article to a customized bracket.

The kit of parts may comprise further pre-manufactured orthodontic articles, for example a plurality of pre-manufactured orthodontic articles for different types of teeth (incisors, canines, premolars, and/or molars). Further the kit may provide pre-manufactured orthodontic articles of different materials (for example steel or alloy), and/or being differently configured in dimension (for example their height protruding from the tooth).

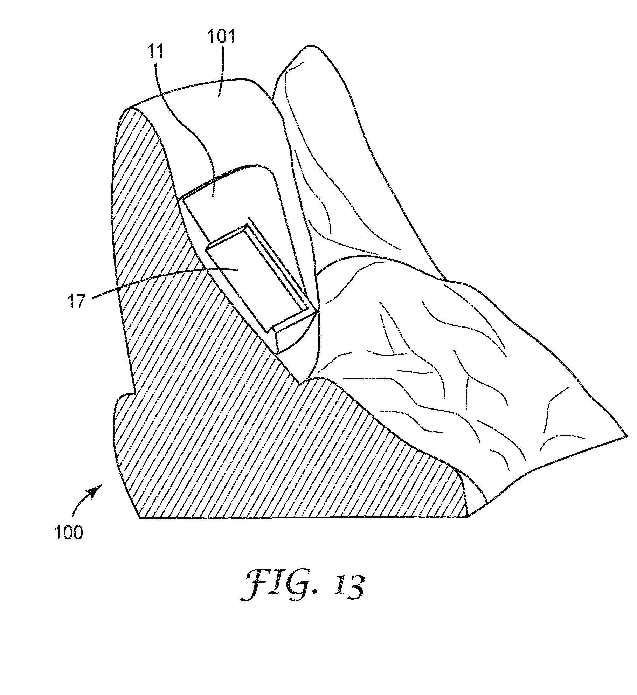

Fig. 13 shows a bonding pad 11 placed on a tooth 101 the bonding pad 11 has a receptacle 17 for receiving a pre-manufactured orthodontic article (not shown). The mold may have a mold cavity which is shaped to replicate the negative shape of a bonding pad of a customized orthodontic bracket. This shape may be arranged in a certain positional relation to a predetermined archwire position of the finished customized bracket although the mold itself may not contain any structure to directly provide an archwire interface. Instead the mold via the receptacle 17 contains a structure to indirectly provide an archwire interface, for example through the geometry of the pre-manufactured orthodontic article in combination with the receptacle 17. The so formed bonding pad may due to the receptacle 17 allow an orthodontic practitioner to easily place the pre-manufactured orthodontic article to a definite position relative to a patient's tooth. This may allow for minimizing the time for placing the bracket and maximizing the precision of the placement.

## Claims

1. A mold (20) for making a customized orthodontic bracket (10), comprising a mold cavity (22) that is configured for molding at least part of the customized orthodontic bracket, with the customized orthodontic bracket comprising:
- a body (12),
- a bonding pad for arranging the bracket at a desired position on a tooth in a patient's dentition; and
- an archwire interface provided by the body at a predetermined archwire position relative to the dentition;
wherein the mold further comprises:
- a positioning structure (25) for positioning the mold relative to the patient's dentition or to a physical model thereof,
- wherein the mold provides the mold cavity and the positioning structure in an appropriate geometric relationship to each other, such that the at least part of the customized orthodontic bracket can be molded on the patient's dentition or the physical model thereof at the desired position, and
- wherein the mold comprises a pre-manufactured orthodontic article (30) and is further adapted to position the orthodontic article relative to the mold cavity such that a surface of the orthodontic article is in fluid communication with the mold cavity, and
- wherein the orthodontic article comprises the archwire interface which comprises a slot (14) for the orthodontic wire and a hook and/or wing (15), and
- wherein the mold comprises a mold gate (24) for guiding a molding material into the mold cavity.

2. The mold of claim 1, wherein the orthodontic article comprises the bonding pad.

3. The mold of any of the preceding claims, wherein the mold cavity has a tooth-related opening (23) which is arranged and shaped such that said tooth seals the tooth-related opening when the mold is positioned at the patient's dentition or the physical model thereof.

4. The mold of any of the preceding claims, further comprising a de-aeration channel (26) for the mold cavity.

5. A kit for making a customized orthodontic bracket, comprising a mold according to any of the preceding claims, and a hardenable molding material.

6. The kit of claim 5, wherein the molding material is a dental restorative material.

7. The kit of claim 5 or 6, further comprising a plurality of differently configured pre-manufactured orthodontic articles (30a, 30b, 30c).

## Patentansprüche

1. Eine Form (20) zum Herstellen einer individuell angepassten kieferorthopädischen Zahnspange (10), eine Formvertiefung (22) umfassend, die zum Formen von mindestens einem Teil der individuell angepassten kieferorthopädischen Zahnspange konfiguriert ist, wobei die individuell angepasste kieferorthopädische Zahnspange umfasst:
- einen Körper (12),
- ein Bondpad zum Anordnen der Zahnspange an einer gewünschten Stelle an einem Zahn im Gebiss eines Patienten; und
- eine Drahtbogenschnittstelle, die von dem Körper an einer vorgegebenen Drahtbogenposition in Bezug auf das Gebiss bereitgestellt wird;
wobei die Form ferner Folgendes umfasst:
- eine Positionierungsstruktur (25) zum Positionieren der Form in Bezug auf das Gebiss des Patienten oder in Bezug auf ein physisches Modell davon,
- wobei die Form die Formvertiefung und die Positionierungsstruktur in einem angemessenen geometrischen Verhältnis zueinander bereitstellt, so dass mindestens ein Teil der individuell angepassten kieferorthopädischen Zahnspange auf dem Gebiss des Patienten oder auf dem physischen Modell davon an der gewünschten Stelle geformt werden kann, und
- wobei die Form einen vorgefertigten kieferorthopädischen Artikel (30) umfasst und ferner daran angepasst ist, den kieferorthopädischen Artikel in Bezug auf die Formvertiefung so zu positionieren, dass eine Oberfläche des kieferorthopädischen Artikels mit der Formvertiefung in Fluidverbindung steht, und
- wobei der kieferorthopädische Artikel die Drahtbogenschnittstelle umfasst, die einen Schlitz (14) für den kieferorthopädischen Draht und einen Haken und/oder einen Flügel (15) umfasst, und
- wobei die Form ein Formgatter (24) zum Leiten einer Formmasse in die Formvertiefung umfasst.

2. Form nach Anspruch 1, wobei der kieferorthopädische Artikel das Bondpad umfasst.

3. Form nach einem der vorstehenden Ansprüche, wobei die Formvertiefung eine zahnbezogene Öffnung (23) aufweist, die so angeordnet und gestaltet ist, dass der Zahn die zahnbezogene Öffnung abdichtet, wenn die Form am Gebiss des Patienten oder am physischen Modell davon positioniert ist.

4. Form nach einem der vorstehenden Ansprüche, ferner einen Entlüftungskanal (26) für die Formvertiefung umfassend.

5. Kit zum Herstellen einer individuell angepassten kieferorthopädischen Zahnspange, eine Form nach einem der vorstehenden Ansprüche und eine härtbare Formmasse umfassend.

6. Kit nach Anspruch 5, wobei die Formmasse ein zahnerhaltendes Material ist.

7. Kit nach Anspruch 5 oder 6, ferner eine Vielzahl unterschiedlich konfigurierter vorgefertigter kieferorthopädischer Artikel (30a, 30b, 30c) umfassend.

## Revendications

1. Moule (20) pour fabriquer un bracket orthodontique personnalisé (10), comprenant une cavité de moule (22) qui est conçue pour mouler au moins une partie du bracket orthodontique personnalisé, le bracket orthodontique personnalisé comprenant :
- un corps (12),
- un plot de liaison pour disposer le bracket à une position souhaitée sur une dent dans la dentition d'un patient ; et
- une interface d'arc dentaire conférée par le corps à une position prédéterminée d'arc dentaire par rapport à la dentition ;
où le moule comprend en outre :
- une structure de positionnement (25) pour positionner le moule par rapport à la dentition du patient ou à un modèle physique de celle-ci,
- où le moule fournit la cavité de moule et la structure de positionnement dans une relation géométrique appropriée l'un par rapport à l'autre, de telle sorte que l'au moins une partie du bracket orthodontique personnalisé peut être moulée sur la dentition du patient ou le modèle physique de celle-ci à la position souhaitée, et
- où le moule comprend un article orthodontique préfabriqué (30) et est en outre adapté pour positionner l'article orthodontique par rapport à la cavité de moule de telle sorte qu'une surface de l'article orthodontique est en communication du point de vue des fluides avec la cavité de moule, et
- dans lequel l'article orthodontique comprend l'interface d'arc dentaire qui comprend une encoche (14) pour le fil orthodontique et un crochet et/ou ailette (15), et
- dans lequel le moule comprend une entrée de moule (24) pour guider un matériau de moulage dans la cavité de moule.

2. Moule selon la revendication 1, dans lequel l'article orthodontique comprend le plot de liaison.

3. Moule selon l'une quelconque des revendications précédentes, dans lequel la cavité de moule possède une ouverture (23) en rapport avec la dent qui est disposée et profilée de telle sorte que ladite dent scelle l'ouverture en rapport avec la dent lorsque le moule est positionné au niveau de la dentition du patient ou du modèle physique de celle-ci.

4. Moule selon l'une quelconque des revendications précédentes, comprenant en outre un canal de désaération (26) pour la cavité de moule.

5. Trousse pour fabriquer un bracket orthodontique personnalisé, comprenant un moule selon l'une quelconque des revendications précédentes, et un matériau de moulage pouvant durcir.

6. Trousse selon la revendication 5, dans laquelle le matériau de moulage est un matériau de restauration dentaire.

7. Trousse selon la revendication 5 ou 6, comprenant en outre une pluralité d'articles orthodontiques préfabriqués configurés différemment (30a, 30b, 30c).
